# EUROPEAN PATENT APPLICATION

(11) **EP 4 699 932 A1**
(43) Date of publication of application: **25.02.2026**
(21) Application number: 24792173.7
(22) Date of filing: 21.05.2024
(51) Int. Cl.: B64C 27/12

(54) **AIRCRAFT AND AIRCRAFT ARM THEREOF**

(30) Priority: 21.04.2023 CN 202320907051 U
(71) Applicant: Autoflight (Kunshan) Co., Ltd., Suzhou, Jiangsu 215345 (CN)
(72) Inventor: TIAN, Yu, Suzhou, Jiangsu 215345 (CN); CUI, Yongqiang, Suzhou, Jiangsu 215345 (CN)
(74) Representative: MERH-IP Matias Erny Reichl Hoffmann Patentanwälte PartG mbB
(86) International application number: PCT/CN2024/094393
(87) International publication number: WO 2024/217590

(57) **Abstract**

The disclosure relates to the field of aircraft technology, and discloses an aircraft arm. The aircraft arm of the disclosure includes a rotor motor and a propeller, with the rotor motor connected to the propeller. The arm body comprises an arm cavity and an arm opening, where the arm cavity is used to accommodate the rotor motor, and the arm opening is connected to the arm cavity. The rotor motor includes a fixing part that encircles the rotor motor. A portion of the rotor motor is disposed within the arm cavity and connected to the edge of the arm opening via the fixing part, while another portion extends outside the aircraft arm and connects to the propeller. The present disclosure directly installs the motor on the aircraft arm, simplifying the installation structure and significantly reducing weight.

## Description

### FIELD OF THE DISCLOSURE

The invention relates to the field of aircraft technology, in particular to an aircraft and its arm.

### BACKGROUND OF THE INVENTION

Conventionally, installing a motor in an aircraft typically requires first mounting a motor mounting plate to the aircraft arm and then installing the motor onto the mounting plate. To ensure firm fixation, multiple reinforcement brackets are often installed on the motor, resulting in complex structural components and increased weight.

### SUMMARY OF THE INVENTION

The purpose of the disclosure is to provide an aircraft and its arm. The disclosure directly installs the motor on the aircraft arm, simplifying the installation structure and significantly reducing weight.

To solve the above technical problem, the present disclosure provides an aircraft arm comprising: a rotor motor and a propeller, wherein the rotor motor is connected to the propeller; an arm body comprising an arm cavity and an arm opening, wherein the arm cavity is used to accommodate the rotor motor, and the arm opening is connected to the arm cavity; the rotor motor includes a fixing part that encircles the rotor motor, wherein a portion of the rotor motor is disposed within the arm cavity and the rotor motor is connected to an edge of the arm opening via the fixing part, while another portion extends outside the aircraft arm and is connected to the propeller.

The present disclosure further provides an aircraft, comprising the aforementioned aircraft arm.

Preferably, the fixing part comprises a motor fixing portion and an arm fixing portion connected to each other, wherein the motor fixing portion is used to fix the rotor motor, and the arm fixing portion is used to fix the edge.

Preferably, the edge of the arm opening is encircled by a metal mounting piece, and the rotor motor is connected to the metal mounting piece via the arm fixing portion, thereby fixing the rotor motor to the aircraft arm.

Preferably, the metal mounting piece is a metal ring embedded within the skin of the edge.

Preferably, a plane (A) of the edge of the arm opening deviates from a cross-sectional plane (B) of the aircraft arm by an angle of 3 to 13 degrees.

Preferably, the metal mounting piece is provided with a plurality of spaced metal mounting holes, and the arm fixing portion is provided with a plurality of spaced fixing holes, wherein the metal mounting holes and the fixing holes are connected one-to-one via bolts.

Preferably, the motor fixing portion extends along an axial direction of the rotor motor, and the arm fixing portion extends along a radial direction of the rotor motor.

Preferably, the plane (A) of the edge of the arm opening is located higher than the arm body on both sides of the arm opening.

Preferably, a centrifugal fan is installed on the portion of the rotor motor extending outside the arm body, and the centrifugal fan is used to dissipate heat from the rotor motor.

The present disclosure directly installs the motor on the aircraft arm, simplifying the installation structure and significantly reducing weight.

### BRIEF DESCRIPTION OF DRAWINGS

FIG. 1 shows a schematic structural diagram of the aircraft arm according to an embodiment of the present disclosure;
FIG. 2 shows an exploded structural diagram of the aircraft arm according to an embodiment of the present disclosure;
FIG. 3 shows a schematic structural diagram of the fixing part according to an embodiment of the present disclosure;
FIG. 4 shows a schematic diagram of the deviation angle between the edge of the arm opening and the cross-sectional plane of the aircraft arm when the rotor motor is installed according to an embodiment of the present disclosure;
FIG. 5 shows a schematic diagram of the height difference between the edge of the arm opening and the arm body according to an embodiment of the present disclosure.

### DETAILED DESCRIPTION

The technical solutions of the present disclosure will be further described below with reference to the accompanying drawings and embodiments. It should be understood that the specific embodiments described herein are merely illustrative of the present disclosure and are not intended to limit it. Additionally, for clarity, the drawings only show parts relevant to the present disclosure and not all details.

In the description of the present disclosure, unless otherwise specified, terms such as "install", "connect", and "attach" should be interpreted broadly. For example, connections may be fixed or detachable, mechanical or electrical, direct or indirect via intermediate components, or internal connections between two elements. Those skilled in the art can understand the specific meanings of these terms in the present disclosure based on the context.

In the present disclosure, unless otherwise specified, the first feature being "on", "above" or "over" the second feature may include direct contact or indirect contact via another feature. Similarly, the first feature being "under", "below" or "beneath" the second feature may include direct contact or indirect contact via another feature.

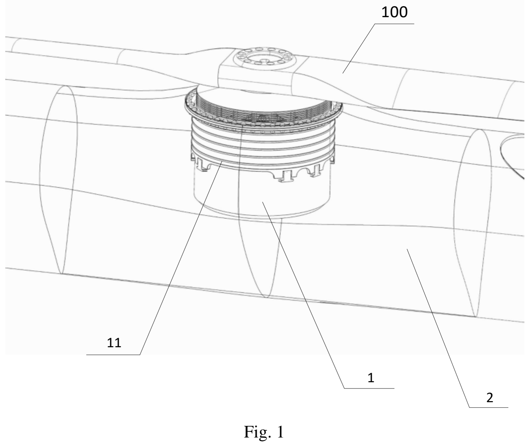

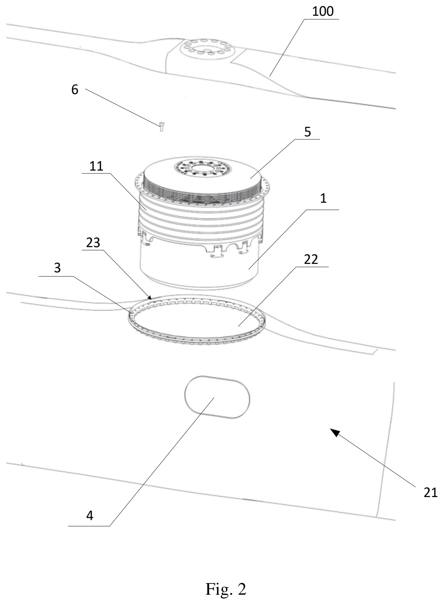

The embodiments of the present disclosure are described below with reference to the accompanying drawings. As shown in Figures 1 and 2, the aircraft arm according to the embodiments of the present disclosure comprises: a rotor motor 1, a propeller 100, and an arm body 2. The rotor motor 1 is connected to the propeller 100, and the arm body 2 comprises an arm cavity 21 and an arm opening 22. The arm cavity 21 is used to accommodate the rotor motor 1, and the arm opening 22 is connected to the arm cavity 21. The rotor motor 1 comprises a fixing part 11 that encircles the rotor motor 1. A portion of the rotor motor 1 is disposed within the arm cavity 21 and the rotor motor 1 is connected to an edge 23 of the arm opening 22 via the fixing part 11, while another portion of the rotor motor 1 extends outside the aircraft arm and is connected to the propeller 100. The present disclosure directly installs the rotor motor on the aircraft arm, simplifying the installation structure and significantly reducing weight, which is beneficial for the lightweight design of the aircraft. Compared to conventional motor fixation methods, the fixation point between the motor and the aircraft arm according to the present disclosure is closer to the propeller, providing better structural stiffness and improving the motor's vibration damping effect.

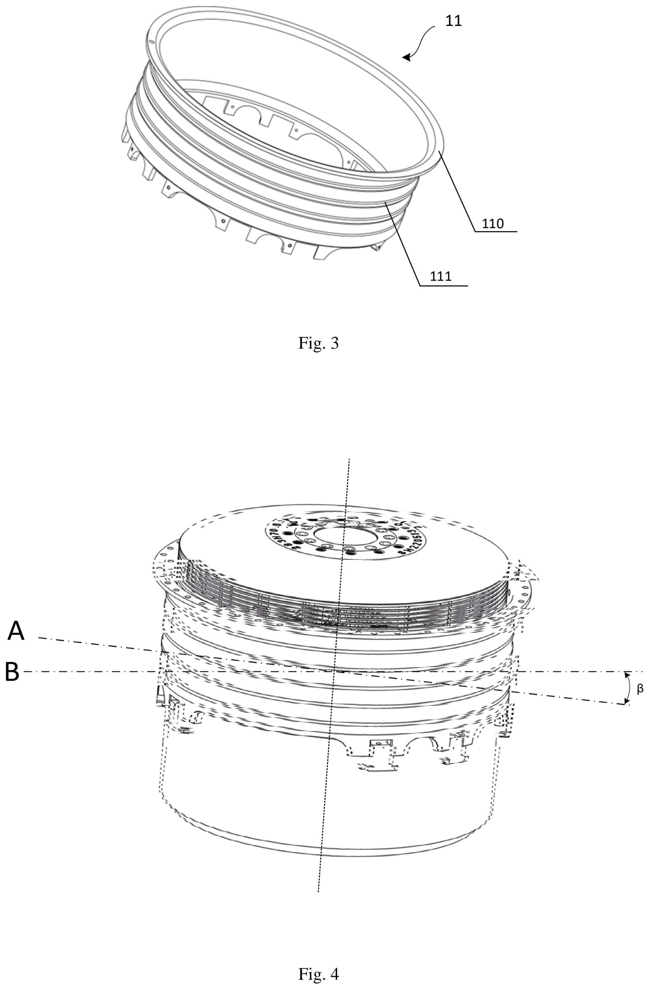

Further, as shown in Figure 3, the fixing part 11 comprises a motor fixing portion 111 and an arm fixing portion 110 connected to each other. The motor fixing portion 111 is used to fix the rotor motor 1, and the arm fixing portion 110 is used to fix the edge 23. Preferably, the motor fixing portion 111 extends axially along the rotor motor 1, and the arm fixing portion 110 extends radially along the rotor motor 1. The motor fixing portion 111 encircles the rotor motor 1, ensuring stable and firm installation. The motor fixing portion 111 may also include a plurality of through-holes to facilitate motor heat dissipation. The arm fixing portion 110 is provided with a plurality of spaced fixing holes. Meanwhile, the edge 23 of the arm opening 22 is encircled by a metal mounting piece 3, which is provided with a plurality of spaced metal mounting holes. The metal mounting holes and the fixing holes are connected one-to-one via bolts 6, thereby fixing the rotor motor 1 to the aircraft arm more stably through the arm fixing portion 110 and the metal mounting piece 3. Preferably, the metal mounting piece 3 is a metal ring embedded within the skin of the edge 23. Embedding the metal mounting piece in the arm opening locally enhances the strength of the skin at the opening, thereby improving the overall stiffness of the arm. Additionally, the exposed bolts allow visual inspection of tightness to determine if the motor installation has failed. Preferably, the skin of the edge 23 is made of fiberglass, which replaces conventional carbon fiber materials to meet insulation requirements between the motor and the aircraft body. Fiberglass is also more flexible than carbon fiber, providing vibration damping effects and effectively reducing vibrations caused by the motor during the transition phase of the aircraft's flight.

Further, as shown in Figure 4, the plane A of the edge 23 of the arm opening 22 deviates from the cross-sectional plane B of the aircraft arm by an angle *β* of 3 to 13 degrees. Multiple power devices of the aircraft may have different deviation angles and directions, which can be used to control the aircraft's navigation direction during rotor flight mode.

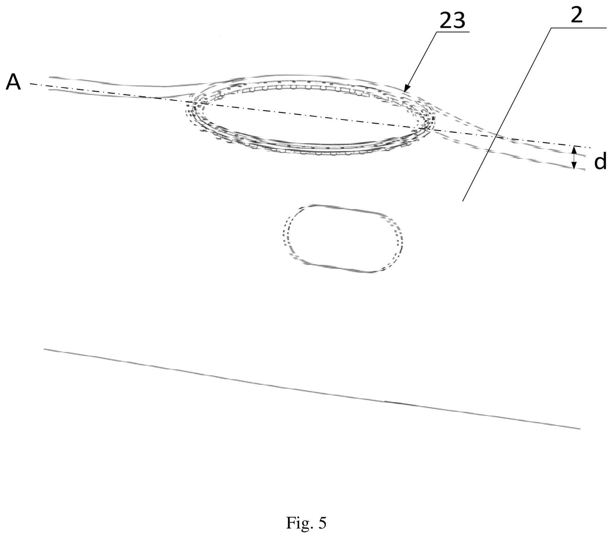

Further, as shown in Figure 5, the plane A of the edge 23 of the arm opening 22 is located higher than the arm body 2 on both sides of the arm opening 22, with a height difference d preferably ranging from 4 to 10 cm. In other words, the edge 23 is elevated to a certain extent, raising the motor 1 and the propeller 100 to prevent interference between the propeller 100 and the aircraft arm during rotation due to unavoidable vertical oscillations.

Further, the aircraft arm additionally includes an operation window 4, which is used for installing the rotor motor 1 into the arm body 2. A centrifugal fan 5 is installed on the portion of the rotor motor 1 extending outside the arm cavity 21 to dissipate heat from the rotor motor 1.

The present disclosure further provides an aircraft, comprising the aforementioned aircraft arm. The present disclosure directly installs the motor on the aircraft arm, simplifying the installation structure and significantly reducing weight, which is highly beneficial for the lightweight design of the aircraft. Compared to conventional motor fixation methods, the fixation point between the motor and the aircraft arm according to the present disclosure is closer to the propeller, providing better structural stiffness and improving the motor's vibration damping effect.

The above embodiments are only illustrative of the principles and effects of the present disclosure. Anyone skilled in the art may modify or change the above embodiments without departing from the purpose of the present disclosure. Therefore, all equivalent modifications or changes made by those skilled in the art without departing from the disclosed purpose of the present disclosure shall fall within the scope of the claims of the present disclosure.

## Claims

1. An aircraft arm, comprising:
a rotor motor (1) and a propeller (100), wherein the rotor motor (1) is connected to the propeller (100);
an arm body (2), comprising an arm cavity (21) and an arm opening (22), wherein the arm cavity (21) is used to accommodate the rotor motor (1); the arm opening (22) is connected to the arm cavity (21); the rotor motor (1) comprises a fixing part (11) that encircles the rotor motor (1), wherein a portion of the rotor motor (1) is disposed within the arm cavity (21) and the rotor motor (1) is connected to an edge (23) of the arm opening (22) via the fixing part (11), while another portion of the rotor motor (1) extends outside the aircraft arm and is connected to the propeller (100).

2. The aircraft arm according to claim 1, wherein the fixing part (11) comprises a motor fixing portion (111) and an arm fixing portion (110) connected to each other, wherein the motor fixing portion (111) is used to fix the rotor motor (1), and the arm fixing portion (110) is used to fix the edge (23).

3. The aircraft arm according to claim 2, wherein the edge (23) of the arm opening (22) is encircled by a metal mounting piece (3), and the rotor motor (1) is connected to the metal mounting piece (3) via the arm fixing portion (110), thereby fixing the rotor motor (1) to the aircraft arm.

4. The aircraft arm according to claim 3, wherein the metal mounting piece (3) is a metal ring embedded within a skin of the edge (23).

5. The aircraft arm according to claim 1, wherein a plane (A) of the edge (23) of the arm opening (22) deviates from a cross-sectional plane (B) of the aircraft arm by an angle of 3 to 13 degrees.

6. The aircraft arm according to claim 3, wherein the metal mounting piece (3) is provided with a plurality of spaced metal mounting holes, and the arm fixing portion (110) is provided with a plurality of spaced fixing holes, wherein the metal mounting holes and the fixing holes are connected one-to-one via bolts (6).

7. The aircraft arm according to claim 2, wherein the motor fixing portion (111) extends along an axial direction of the rotor motor (1), and the arm fixing portion (110) extends along a radial direction of the rotor motor (1).

8. The aircraft arm according to claim 1, wherein the plane (A) of the edge (23) of the arm opening (22) is located higher than the arm body (2) on both sides of the arm opening (22).

9. The aircraft arm according to claim 1, wherein a centrifugal fan (5) is installed on the portion of the rotor motor (1) extending outside the arm body (2), and the centrifugal fan (5) is used to dissipate heat from the rotor motor (1).

10. An aircraft, comprising the aircraft arm according to any one of claims 1 to 9.
